(19) Europäisches Patentamt
European Patent Office
Office européen des brevets

(11) **EP 3 801 895 B1**

(12) **FASCICULE DE BREVET EUROPEEN**

(45) Date de publication et mention
de la délivrance du brevet:
**03.05.2023 Bulletin 2023/18**

(21) Numéro de dépôt: **19724492.4**

(22) Date de dépôt: **16.05.2019**

(51) Classification Internationale des Brevets (IPC):
**B01J 29/80** (2006.01)    **B01J 29/70** (2006.01)
**C01B 39/02** (2006.01)    **C01B 39/48** (2006.01)

(52) Classification Coopérative des Brevets (CPC):
**B01J 29/80; B01J 29/70; B01J 29/7007;
C01B 39/023; C01B 39/026; C01B 39/48**

(86) Numéro de dépôt international:
**PCT/EP2019/062564**

(87) Numéro de publication internationale:
**WO 2019/224091 (28.11.2019 Gazette 2019/48)**

(54) **PROCÉDÉ DE SYNTHÈSE D'UN MATÉRIAU COMPOSITE COMPOSÉ D'UN MÉLANGE DE ZÉOLITHES DE TYPE STRUCTURAL AFX ET DE TYPE STRUCTURAL BEA EN PRÉSENCE D'UN STRUCTURANT ORGANIQUE AZOTÉ**

VERFAHREN ZUR SYNTHESE EINES VERBUNDSTOFFES AUS EINER MISCHUNG AUS ZEOLITHEN MIT AFX- UND BEA-STRUKTUR IN GEGENWART EINES ORGANISCHEN STICKSTOFFHALTIGEN STRUKTURIERUNGSMITTELS

METHOD FOR SYNTHESIZING A COMPOSITE MATERIAL CONSISTING OF A MIXTURE OF AFX- AND BEA-STRUCTURE ZEOLITES IN THE PRESENCE OF AN ORGANIC NITROGEN-CONTAINING STRUCTURING AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2018 FR 1854385**

(43) Date de publication de la demande:
**14.04.2021 Bulletin 2021/15**

(73) Titulaire: **IFP Energies nouvelles
92852 Rueil-Malmaison (FR)**

(72) Inventeurs:
• **MARTINEZ FRANCO, Raquel
92852 RUEIL-MALMAISON (FR)**
• **HARBUZARU, Bogdan
92852 RUEIL-MALMAISON (FR)**

(74) Mandataire: **IFP Energies nouvelles
Département Propriété Industrielle
Rond Point de l'échangeur de Solaize
BP3
69360 Solaize (FR)**

(56) Documents cités:
**WO-A1-2016/205509    WO-A1-2017/087385
WO-A1-2017/202495**

• **MARTÍN NURIA ET AL: "Cage-based small-pore catalysts for NH3-SCR prepared by combining bulky organic structure directing agents with modified zeolites as reagents", APPLIED CATALYSIS B: ENVIRONMENTAL, ELSEVIER, AMSTERDAM, NL, vol. 217, 29 mai 2017 (2017-05-29), pages 125-136, XP085112832, ISSN: 0926-3373, DOI: 10.1016/J.APCATB.2017.05.082**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

La présente invention se rapporte à un procédé de préparation directe d'un matériau composite contenant un mélange intime d'une zéolithe de type structural AFX et d'une zéolithe de type structural BEA. Ce procédé permet de réaliser la synthèse directe d'un matériau composite zéolithique AFX-BEA, par conversion/transformation sous conditions hydrothermales d'un ensemble particulier d'au moins deux zéolithes de type structural FAU, utilisées comme source de silicium et d'aluminium, en présence d'une molécule organique spécifique comportant deux fonctions ammonium quaternaire, également appelée structurant, choisi parmi 1,5-bis(méthylpiperidinium)pentane, 1,6-bis(méthylpiperidinium)hexane et 1,7-bis(méthylpiperidinium)heptane, sous leur forme dihydroxyde. La présente invention se rapporte également au matériau composite zéolithique lui-même. Ledit matériau composite zéolithique, contenant un mélange de zéolithes de type structural AFX et de type structural BEA, obtenu selon le procédé de l'invention, trouve avantageusement son application en tant que catalyseur, adsorbant ou agent de séparation.

**Art antérieur**

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.

Les zéolithes de type structural AFX comprennent en particulier la zéolithe SSZ-16, et les solides apparentés, dits zéotypes, SAPO-56 et MEAPSO-56. Une zéolithe de type structural AFX présente un système tridimensionnel de pores délimités par huit tétraèdres et est formé par deux types de cages: gmelinite (cage GME) et une grande cage AFT (-8,3 x 13,0 Å).

De nombreuses méthodes de synthèse de zéolithes de type structural AFX, en particulier de la zéolithe SSZ-16, sont connues. La zéolithe SSZ-16 a été synthétisée, par exemple, en utilisant des espèces organiques azotées dérivées de composés 1,4-di (1-azoniabicyclo [2.2.2] octane) alcanes inférieurs (US. Patent No. 4,508,837). Chevron Research and Technology Company a préparé la zéolithe SSZ-16 en présence de cations DABCO-$C_n$-diquat, où DABCO représente le 1,4-diazabicyclo [2.2.2] octane et n est 3, 4 ou 5 (U.S. Patent No.5,194,235). S.B. Hong *et al.* ont utilisés l'ion alkylammonium diquaternaire Et6-diquat-n, où Et6-diquat représente N',N'-bis-triethylpentanediammonium et n est 5, comme agent de la structure pour la synthèse de la zéolithe SSZ-16 (Micropor. Mesopor. Mat., 60 (2003) 237-249). On peut citer également l'utilisation des cations 1,3-bis(adamantyl)imidazolium comme agent structurant pour la préparation de zéolithe de type structural AFX (R.H.Archer et al. dans Microp. Mesopor. Mat., 130 (2010) 255-2265 ; Johnson Matthey Company WO2016077667A1 ). Inagaki Satoshi et al., dans la demande JP 2016169139 ont utilisé des cations divalents N,N,N',N'-tétra-arquirubicyclo[2.2.2]oct-7-ene-2,3:05,6-dipyrrolidium substitués avec des groupes alkyle pour préparer la zéolithe SSZ-16. Chevron U.S.A. (WO2017/200607 A1) propose de réaliser la synthèse d'une zéolithe SSZ-16 en utilisant les dications :1,1'-(1,4-cyclohexylenedimethylene)bis[1-methylpiperidinium], 1,1'-(1,4-cyclohexylenedimethylene)bis[1-methylpyrrolidinium], 1,1'-(1,4-cyclohexylene dimethylene)bis[1-ethylpyrrolidinium]. H.-Y. Chen et al. (Johnson Matthey Company, US 2018/0093897) ont utilisé un mélange de cations contenant au moins le 1,3-bis(adamantyl)imidazolium et une amine neutre pour préparer la zéolithe JMZ-10 de type structural AFX en absence de cations alcalins. H.-Y. Chen et al. (Johnson Matthey Company, US2018/0093259) ont utilisé un mélange de cations contenant une molécule organique choisie parmi le 1,3-bis(adamantyl)imidazolium, le N,N-dimethyl-3,5-dimethylpiperidinium, le N,N-diethyl-cis-2,6-dimethylpiperidinium, le N,N,N-1-trimethyladamantylammonium, le N,N,N-dimethylethylcyclohexylammonium et au moins un cation de métal alcalino-terreux pour obtenir la zéolithe JMZ-7 de type structural AFX qui présente des sites Al proches par rapport à une synthèse contenant des cations alcalins. WO2017202495 A1 divulgue un procédé de préparation d'une zéolithe de type structural AFX à partir d'un mélange aqueux comprenant une zéolithe de type structural FAU (USY, ratio molaire SiO2/Al2O3 de 5), de la silice colloïdale, et du dihydroxyde de 1,6-bis(méthylpiperidinium)hexane.

La présente invention a pour objet un procédé de préparation d'un matériau composite zéolithique composé d'un mélange de zéolithes de type structural AFX et de type structural BEA. L'intérêt de l'invention réside dans la nature même du matériau composite obtenu, composé de deux zéolithes différentes, de type structural AFX et de type structural BEA, intimement mélangées. L'intérêt de la présente invention réside également dans la forte proportion (avantageusement supérieure ou égale à 90% massique) du mélange AFX-BEA dans ledit matériau composite obtenu. L'utilisation d'un tel matériau peut être alors envisagée dans différentes applications, par exemple comme catalyseur, adsorbant ou agent de séparation.

## Résumé de l'invention

La présente invention concerne un procédé de préparation d'un matériau composite zéolithique composé d'un mélange de zéolithes de type structural AFX et de type structural BEA, comprenant au moins les étapes suivantes :
i) le mélange en milieu aqueux, d'une zéolithe FAU ayant un rapport molaire $SiO_2/Al_2O_3$ compris entre 30 et 100 avec au moins une zéolithe de type structural FAU ayant un ratio molaire $SiO_2/Al_2O_3$ compris entre 2 et 30 (borne supérieure exclue), et où le paramètre mathématique, $P_{ze}$, correspondant au pourcentage massique de la zéolithe FAU de rapport molaire $SiO_2/Al_2O_3$ compris entre 30 et 100, sous sa forme anhydre (exprimé en %) dans le mélange de zéolithes FAU, multiplié par le rapport molaire $SiO_2/Al_2O_3$ de ladite même zéolithe FAU de rapport molaire $SiO_2/Al_2O_3$ compris entre 30 et 100, est tel que : $3250 < P_{ze} < 7200$, d'au moins un composé organique azoté R, choisi parmi le dihydroxyde de 1,5-bis(méthylpiperidinium) pentane, le dihydroxyde de 1,6-bis(méthylpiperidinium) hexane, le dihydroxyde de 1,7-bis(méthylpiperidinium) heptane et leurs mélanges, d'au moins une source d'au moins un métal alcalin et/ou métal alcalino-terreux M de valence n, n étant un nombre entier supérieur ou égal à 1, le mélange réactionnel présentant la composition molaire suivante :

| | |
|---|---|
| $(SiO_2\,_{(FAU)})/(Al_2O_3\,_{(FAU)})$ | compris entre 30 et 80, |
| $H_2O/(SiO_2\,_{(FAU)})$ | compris entre 1 et 100, |
| $R/(SiO_2\,_{(FAU)})$ | compris entre 0,01 à 0,6, |
| $M_{2/n}O/(SiO_2\,_{(FAU)})$ | compris entre 0,005 à 0,45, |

dans laquelle $SiO_2\,_{(FAU)}$ est la quantité molaire de $SiO_2$ apportée par l'ensemble des zéolithes de type structural FAU introduites dans le mélange, $Al_2O_3\,_{(FAU)}$ est la quantité molaire de $Al_2O_3$ apportée par l'ensemble des zéolithes de type structural FAU introduites dans le mélange, $H_2O$ la quantité molaire d'eau présente dans le mélange réactionnel, R la quantité molaire dudit composé organique azoté, $M_{2/n}O$ étant la quantité molaire de $M_{2/n}O$ apportée par l'ensemble des zéolithes FAU et par la source de métal alcalin et/ou de métal alcalino-terreux, jusqu'à l'obtention d'un gel précurseur homogène ;
ii) le traitement hydrothermal dudit gel précurseur obtenu à l'issue de l'étape i) à une température comprise entre 120°C et 220°C, pendant une durée comprise entre 12 heures et 15 jours.

La présente invention concerne également un matériau composite zéolithique présentant une structure zéolitique composée d'un mélange intime de zéolithes de type structural AFX et de type structural BEA, ledit matériau composite étant préparé par synthèse directe et comprenant :

- entre 30 et 90% massique, de préférence entre 40 et 90% massique, de zéolithe de type structural AFX, par rapport à la masse totale dudit matériau composite sous sa forme anhydre ;
- entre 10 et 70% massique de zéolithe de type structural BEA, de préférence entre 10 et 60% massique, de zéolithe de type structural BEA, par rapport à la masse totale dudit matériau composite sous sa forme anhydre, ledit matériau composite présentant un rapport molaire SiO2/Al2O3 compris entre 2 et 100.

Un avantage de la présente invention réside dans le matériau particulier préparé, ce matériau consistant en un matériau composite contenant un mélange intime d'une zéolithe de type structural AFX et d'une zéolithe de type structural BEA.

Un autre avantage de l'invention consiste à réaliser la synthèse directe dudit matériau composite AFX-BEA. Le procédé selon l'invention consiste en effet à préparer ledit matériau composite zéolithique particulier par conversion/transformation directe (c'est-à-dire en une seule étape réactionnelle), sous conditions hydrothermales, d'un mélange d'au moins deux zéolithes de type structural FAU, en présence d'un composé organique azoté spécifique, appelé encore structurant ou structurant organique, choisi parmi le dihydroxyde de 1,5-bis(méthylpiperidinium)pentane, le dihydroxyde de 1,6-bis(méthylpiperidinium)hexane et le dihydroxide de 1,7-bis(méthylpiperidinium)heptane.

En particulier, la demanderesse a découvert que le composé organique azoté ou structurant choisi parmi 1,5-bis(méthylpiperidinium)pentane, 1,6-bis (méthylpiperidinium)hexane ou 1,7-bis(méthylpiperidinium)heptane sous sa forme dihydroxyde, mis en mélange avec au moins deux zéolithes de type structural FAU, comme source de silicium et d'aluminium, en respectant les conditions telles que une des zéolithes FAU a un rapport molaire $SiO_2/Al_2O_3$ compris entre 30 et 100, la (ou les) autres zéolithes de type structural FAU ayant un ratio molaire $SiO_2/Al_2O_3$ compris entre 2 et 30, et que le produit mathématique, $P_{ze}$, entre le pourcentage massique de la zéolithe FAU de rapport molaire $SiO_2/Al_2O_3$ compris entre 30 et 100, sous sa forme anhydre (exprimé en %) dans le mélange de zéolithes FAU de départ et son rapport molaire $SiO_2/Al_2O_3$, soit supérieur strictement à 3250 et inférieur strictement à 7200, de préférence $3350 < P_{ze} < 7100$, conduit à la production d'un gel précurseur d'un matériau composite AFX-BEA présentant un ratio molaire de la quantité totale de $SiO_2$ sur la quantité totale de $Al_2O_3$ compris entre 30 et 80, puis à la production d'un matériau composite AFX-BEA. Avantageusement, le procédé selon l'invention permet d'obtenir un matériau composite AFX-BEA présentant une forte proportion, avantageusement supérieure ou égale à 90% massique, préférence supérieure ou égale à 95%, préférentiellement supérieure ou égale à 98% et d'une manière encore plus préféré supérieure ou égale à 99,8%, de zéolithes AFX et BEA, voire dépourvu d'impuretés et/ou de phases cristallines ou amorphes autres que celles des zéolithes AFX et BEA.

Un autre avantage de la présente invention est de permettre la préparation d'un gel précurseur d'un matériau composite AFX-BEA, présentant un ratio molaire $SiO_2/Al_2O_3$ compris entre les ratios molaires $SiO_2/Al_2O_3$ des deux zéolithes de type structural FAU de départ. Le procédé de préparation selon l'invention permet donc d'ajuster le ratio $SiO_2/Al_2O_3$ du gel précurseur en fonction de l'apport total de $SiO_2$ et de $Al_2O_3$ présent dans les deux zéolithes de type structural FAU au sein du mélange réactionnel.

**Description détaillée de l'invention**

Selon l'invention, les termes « matériau composite », « matériau composite zéolithique » et « matériau composite AFX-BEA » sont synonymes et employés indifféremment pour désigner un matériau solide présentant une structure zéolithique composée d'un mélange de zéolithes de type structural AFX et de type structural BEA, comprenant :

- entre 30 et 90%, de préférence entre 40 et 90% massique de zéolithe de type structural AFX, par rapport à la masse totale dudit matériau composite sous sa forme anhydre ;

- entre 10 et 70%, de préférence entre 10 et 60% massique de zéolithe de type structural BEA, par rapport à la masse totale dudit matériau composite sous sa forme anhydre.

Le matériau composite AFX-BEA selon l'invention présente de préférence un rapport massique (AFX/BEA) de la zéolithe de type structural AFX par rapport à la zéolithe de type structural BEA compris entre 0,4 et 9, préférentiellement entre 0,5 et 7,5 et plus préférentiellement encore entre 1 et 4.

Le matériau composite selon l'invention présente un rapport molaire $SiO_2/Al_2O_3$ compris entre 2 et 100, de préférence compris entre 4 et 90 et plus préférentiellement entre 6 et 80.

Dans la présente invention, la zéolithe de type structural BEA du matériau composite selon l'invention est de préférence une zéolithe beta contenant un mélange contenant entre 35 et 45% massique, de préférence 40% massique, de polymorphe A et entre 55 et 65% massique, de préférence 60% massique, de polymorphe B. Avantageusement, ledit matériau composite défini précédemment est susceptible d'être obtenu par le procédé de préparation selon l'invention.

Conformément à l'invention, on définit un paramètre $P_{ze}$ pour les zéolithes FAU ayant un rapport molaire $SiO_2/Al_2O_3$ compris entre 30 et 100 présentes dans le mélange de zéolithes FAU de départ, comme le produit mathématique entre le pourcentage massique de la zéolithe FAU de rapport molaire $SiO_2/Al_2O_3$ compris entre 30 et 100, sous sa forme anhydre (exprimé en %) dans le mélange de zéolithes FAU de départ, et son rapport molaire $SiO_2/Al_2O_3$, la somme des pourcentages massiques de chacune des zéolithes FAU sous la forme anhydre dans le mélange de départ étant égale à 100. Par exemple, lorsqu'on part d'un mélange de deux zéolithes FAU, ledit paramètre $P_{ze}$ pour la zéolithe ayant un rapport molaire $SiO_2/Al_2O_3$ compris entre 30 et 100 correspond au pourcentage (exprimé en %) de ladite zéolithe FAU ayant un rapport molaire $SiO_2/Al_2O_3$ compris entre 30 et 100 sous sa forme anhydre dans le mélange de zéolithes FAU de départ multiplié par le ratio molaire $SiO_2/Al_2O_3$ de ladite zéolithe FAU ayant un rapport molaire $SiO_2/Al_2O_3$ compris entre 30 et 100.

Selon l'invention, les termes « gel », « gel précurseur » sont synonymes et correspondent au mélange réactionnel homogène obtenu en fin d'étape i) du procédé selon l'invention.

Selon la présente invention, l'expression « compris entre ... et ... » signifie que les valeurs aux bornes de l'intervalle sont incluses dans la gamme de valeurs décrite. Si tel n'était pas le cas et que les valeurs aux bornes n'étaient pas incluses dans la gamme décrite, une telle précision sera apportée par la présente invention.

La présente invention a plus précisément pour objet un procédé de préparation d'un matériau composite zéolithique composé d'un mélange de zéolithes de type structural AFX et de type structural BEA, comprenant au moins, en particulier consistant en, les étapes suivantes :

i) le mélange en milieu aqueux, d'une zéolithe FAU ayant un rapport molaire $SiO_2/Al_2O_3$ compris entre 30 et 100 avec au moins une zéolithe de type structural FAU ayant un ratio molaire $SiO_2/Al_2O_3$ compris entre 2 et 30 (borne supérieure exclue), et où le paramètre mathématique, $P_{ze}$, correspondant au pourcentage massique de la zéolithe FAU de rapport molaire $SiO_2/Al_2O_3$ compris entre 30 et 100, sous sa forme anhydre (exprimé en %) dans le mélange de zéolithes FAU, multiplié par le rapport molaire $SiO_2/Al_2O_3$ de ladite même zéolithe FAU de rapport molaire $SiO_2/Al_2O_3$ compris entre 30 et 100, est tel que : $3250 < P_{ze} < 7200$, de préférence $3350 < P_{ze} < 7100$, d'au moins un composé organique azoté R, choisi parmi le dihydroxyde de 1,5-bis(méthylpiperidinium)pentane, le dihydroxyde de 1,6-bis(méthylpiperidinium)hexane, le dihydroxyde de 1,7-bis(méthylpiperidinium)heptane et leurs mélanges, au moins une source d'au moins un métal alcalin et/ou métal alcalino-terreux M de valence n, n étant un nombre entier supérieur ou égal à 1, le mélange réactionnel présentant la composition molaire suivante :

| | |
|---|---|
| $(SiO_{2\,(FAU)})/(Al_2O_{3\,(FAU)})$ | compris entre 30 et 80, de préférence entre 32 et 70 |
| $H_2O/(SiO_{2\,(FAU)})$ | compris entre 1 et 100, de préférence entre 5 et 60 |
| $R/(SiO_{2\,(FAU)})$ | compris entre 0,01 et 0,6, de préférence entre 0,05 et 0,5 |
| $M_{2/n}O/(SiO_{2\,(FAU)})$ | compris entre 0,005 et 0,45, de préférence entre 0,01 et 0,25 |

dans laquelle $SiO_{2\,(FAU)}$ est la quantité molaire de $SiO_2$ apportée par l'ensemble des zéolithes de type structural FAU introduites dans le mélange, $Al_2O_{3\,(FAU)}$ est la quantité molaire de $Al_2O_3$ apportée par l'ensemble des zéolithes de type structural FAU introduites dans le mélange, $H_2O$ la quantité molaire d'eau présente dans le mélange réactionnel, R la quantité molaire dudit composé organique azoté, $M_{2/n}O$ étant la quantité molaire de $M_{2/n}O$ apportée par l'ensemble des zéolithes FAU et par la source de métal alcalin et/ou de métal alcalino-terreux,

l'étape i) étant conduite pendant une durée permettant l'obtention d'un gel précurseur;

ii) le traitement hydrothermal dudit gel précurseur obtenu à l'issue de l'étape i) à une température comprise entre 120°C et 220°C pendant une durée comprise entre 12 heures et 15 jours.

Avantageusement, le matériau composite zéolithique visé, composé d'un mélange de zéolithes AFX et BEA, se forme lors du traitement hydrothermal de l'étape ii) du procédé selon l'invention.

## L'étape i) de mélange

L'étape i) comprend le mélange en milieu aqueux, d'une zéolithe FAU ayant un rapport molaire $SiO_2/Al_2O_3$ compris entre 30 et 100, avec au moins une zéolithe de type structural FAU ayant un ratio molaire $SiO_2/Al_2O_3$ compris entre 2 et 30 (borne supérieure exclue), et où $3250 < P_{ze} < 7200$ de préférence $3350 < P_{ze} < 7100$, d'au moins un composé organique azoté R, choisi parmi le dihydroxyde de 1,5-bis(méthylpiperidinium)pentane, le dihydroxyde de 1,6-bis(méthylpiperidinium)hexane, le dihydroxyde de 1,7-bis(méthylpiperidinium)heptane et leurs mélanges, au moins une source d'au moins un métal alcalin et/ou métal alcalino-terreux M de valence n, n étant un nombre entier supérieur ou égal à 1, le mélange réactionnel présentant la composition molaire suivante :

| | |
|---|---|
| $(SiO_{2\,(FAU)})/(Al_2O_{3\,(FAU)})$ | compris entre 30 et 80, de préférence entre 32 et 70 |
| $H_2O/(SiO_{2\,(FAU)})$ | compris entre 1 et 100, de préférence entre 5 et 60 |
| $R/(SiO_{2\,(FAU)})$ | compris entre 0,01 et 0,6, de préférence entre 0,05 et 0,5 |
| $M_{2/n}O/(SiO_{2\,(FAU)})$ | compris entre 0,005 et 0,45, de préférence entre 0,01 et 0,25 |

dans laquelle $SiO_{2\,(FAU)}$ est la quantité molaire de $SiO_2$ apportée par l'ensemble des zéolithes de type structural FAU introduites dans le mélange, $Al_2O_{3\,(FAU)}$ est la quantité molaire de $Al_2O_3$ apportée par l'ensemble des zéolithes de type structural FAU introduites dans le mélange, $H_2O$ la quantité molaire d'eau présente dans le mélange réactionnel, R la quantité molaire dudit composé organique azoté, $M_{2/n}O$ étant la quantité molaire de $M_{2/n}O$ apportée par l'ensemble des zéolithes FAU et par la source de métal alcalin et/ou de métal alcalino-terreux.

L'étape i) permet l'obtention d'un gel précurseur homogène.

Conformément à l'invention, une zéolithe FAU ayant un rapport molaire $SiO_2/Al_2O_3$ compris entre 30 (borne inférieure incluse) et 100 (borne supérieure incluse) et au moins une zéolithe de type structural FAU ayant un ratio molaire $SiO_2/Al_2O_3$ compris entre 2 (borne inférieure incluse) et 30 (borne supérieure exclue), sont incorporées dans le mélange réactionnel pour la mise en oeuvre de l'étape (i) comme sources d'élément silicium et aluminium. Les ratios molaires $SiO_2/Al_2O_3$ des zéolithes FAU incorporés au mélange réactionnel à l'étape i) du procédé selon l'invention sont avantageusement différents entre eux. Avantageusement, le ratio molaire global de l'élément silicium, exprimé sous forme oxyde $SiO_2$, apporté par l'ensemble des zéolithes FAU de départ, par rapport à l'élément aluminium, exprimé sous forme oxyde $Al_2O_3$, apporté par l'ensemble des zéolithes FAU de départ, est compris entre 30 et 80, de préférence entre 32 et 70.

Conformément à l'invention, les zéolithes de type structural FAU mises en oeuvre dans le mélange réactionnel à l'étape i) du procédé selon l'invention ont des ratios molaires $SiO_2/Al_2O_3$ différents et sont telles que : $3250 < P_{ze} < 7200$ de préférence $3350 < P_{ze} < 7100$.

Ainsi, en fonction des zéolithes FAU de départ, dont les ratios molaires $SiO_2/Al_2O_3$ sont différents, et de leurs quantités relatives, le ratio molaire $SiO_2/Al_2O_3$ du gel précurseur du matériau composite AFX-BEA visé peut être ajusté.

Les zéolithes de type structural FAU de départ, celle de ratio molaire $SiO_2/Al_2O_3$ compris entre 30 et 100 et celle(s) de ratio molaire $SiO_2/Al_2O_3$ compris entre 2 et 30 (borne supérieure exclue), peuvent être obtenues par n'importe quelle méthode connue par l'homme du métier, comme par exemple par synthèse directe dans le cas des zéolithes FAU ayant un ratio molaire $SiO_2/Al_2O_3$ inférieur à 6 ou par traitement à la vapeur (steaming) et/ou lavages acides sur une zéolithe de type structural FAU ayant un ratio molaire $SiO_2/Al_2O_3$ inférieur à 6 dans le cas des zéolithes FAU ayant un ratio molaire $SiO_2/Al_2O_3$ supérieur ou égal à 6. Lesdites zéolithes de type structural FAU de départ peuvent être utilisées dans leur forme sodique ou tout autre forme. Elles peuvent par exemple, avant d'être mises en oeuvre dans le procédé selon l'invention, subir un échange d'une partie ou de la totalité de leurs cations sodium avec des cations ammonium, suivi ou non d'une étape de calcination. Parmi les sources de zéolithes FAU de ratio molaire $SiO_2/Al_2O_3$ compris entre 30 et 100 et les sources de zéolithes FAU de ratio molaire $SiO_2/Al_2O_3$ compris entre 2 et 30 (borne supérieure exclue) peuvent être citées les zéolithes commerciales de type Y produites par Zeolyst et par TOSOH, par exemple les zéolithes commerciales CBV100, CBV600, CBV712, CBV720, CBV760 et CBV780, et les zéolithes commerciales HSZ-320HOA, HSZ-350HUA, HSZ-360HUA et HSZ-385HUA.

Conformément à l'invention, l'étape i) de mélange est réalisé en milieu aqueux, c'est-à-dire dans l'eau, de préférence de l'eau déionisée, de telle façon que le ratio molaire $H_2O/(SiO_{2\ (FAU)})$ est avantageusement compris entre 1 et 100, de préférence entre 5 et 60, $SiO_{2\ (FAU)}$ étant la quantité molaire de $SiO_2$ apportée par la zéolithe FAU de départ, $H_2O$ étant la quantité molaire d'eau présent dans le mélange réactionnel.

Conformément à l'invention, le mélange réactionnel comprend au moins un, de préférence un, composé organique azoté R, choisi parmi le dihydroxyde de 1,5-bis(méthylpiperidinium)pentane, le dihydroxyde de 1,6-bis(méthylpiperidinium)hexane le dihydroxyde de 1,7-bis(méthylpiperidinium)heptane et leurs mélanges, ledit composé étant incorporé dans le mélange réactionnel pour la mise en oeuvre de l'étape (i), comme structurant organique. De préférence, le structurant R incorporé dans le mélange réactionnel est le dihydroxyde de 1,6-bis(méthylpiperidinium)hexane. L'anion associé aux cations ammonium quaternaires présents dans l'espèce organique structurante pour la synthèse d'un matériau composite zéolithique AFX-BEA selon l'invention est l'anion hydroxyde.

Avantageusement, le structurant R est incorporé dans le mélange réactionnel de telle façon que le ratio molaire $(R/(SiO_{2\ (FAU)}))$ entre la quantité molaire dudit composé organique azoté R et la quantité molaire de $SiO_2$ apportée par l'ensemble des zéolithes de départ est compris entre 0,01 et 0,6, de préférence entre 0,05 et 0,5.

Conformément à l'invention, au moins une source d'au moins un métal alcalin et/ou alcalino-terreux M de valence n, n étant un nombre entier supérieur ou égal à 1, est mise en oeuvre dans le mélange réactionnel de l'étape i). Le métal alcalin et/ou alcalino-terreux M est de préférence choisi parmi le lithium, le potassium, le sodium, le magnésium et le calcium et le mélange d'au moins deux de ces métaux. De manière très préférée, M est le sodium.

De préférence, la source d'au moins un métal alcalin et/ou alcalino-terreux M est l'hydroxyde de sodium.

Avantageusement, la quantité de métal alcalin et/ou alcalino-terreux M de valence n, incorporée dans le mélange réactionnel est telle que le ratio molaire $M_{2/n}O/(SiO_{2\ (FAU)})$ est compris entre 0,005 et 0,45, de préférence entre 0,01 et 0,25, $M_{2/n}O$ étant la quantité molaire de $M_{2/n}O$ apportée par l'ensemble des zéolithes FAU et par la source de métal alcalin et/ou de métal alcalino-terreux, $SiO_{2\ (FAU)}$ la quantité molaire de $SiO_2$ apportée par l'ensemble des zéolithes FAU incorporé dans le mélange réactionnel.

L'étape i) de mélange du procédé selon l'invention est mise en oeuvre jusqu'à obtention d'un mélange réactionnel homogène, appelé gel ou gel précurseur, de préférence pendant une durée supérieure ou égale à 10 minutes et avantageusement pendant moins de 2 heures, en particulier moins de 1,5 heures, de préférence à température ambiante et de préférence sous agitation, à faible ou fort taux de cisaillement, le système d'agitation étant tout système connu de l'homme du métier, par exemple un agitateur mécanique à pâles ou une turbine.

Lors de cet étape i) de mélange, le solvant aqueux introduit peut éventuellement en partie s'évaporer.

L'étape (i) du procédé selon l'invention consiste à préparer un mélange réactionnel aqueux contenant au moins deux zéolithes de type structural FAU, au moins un composé organique azoté R, R étant choisi parmi le dihydroxyde de 1,5-bis(méthylpiperidinium)pentane, le dihydroxyde de 1,6-bis(méthylpiperidinium)hexane et le dihydroxyde de 1,7-bis(méthylpiperidinium)heptane en présence d'au moins une source d'un ou plusieurs métal(aux) alcalin(s) et/ou alcalino-terreux, pour obtenir un gel précurseur d'un matériau composite zéolithique AFX-BEA. Les quantités desdits réactifs sont ajustées comme indiqué précédemment de manière à conférer à ce gel une composition permettant la cristallisation d'un matériau composite AFX-BEA.

Il peut être avantageux d'ajouter des germes d'une zéolithe de type structural AFX d'une zéolithe de type structural BEA et/ou d'un matériau composite AFX-BEA au mélange réactionnel au cours de ladite étape i) du procédé de l'invention afin de réduire le temps nécessaire à la formation des cristaux du matériau composite zéolithique et/ou la durée totale de cristallisation. Lesdits germes cristallins favorisent également la formation dudit matériau composite AFX-BEA au détriment d'impuretés. Les germes cristallins sont généralement ajoutés dans une proportion comprise entre 0,01 et 10% de la masse totale des sources desdits élément(s) tétravalent(s) et trivalent(s) considérés sous leurs forme anhydre utilisées dans le mélange réactionnel, lesdits germes cristallins n'étant pas pris en compte dans la masse totale des sources des éléments tétravalents et trivalents. Lesdits germes ne sont pas non plus pris en compte pour déterminer la composition du mélange réactionnel et/ou du gel, définie plus avant, c'est-à-dire dans la détermination des différents rapports molaires, en particulier $(SiO_{2\,(FAU)})/(Al_2O_{3\,(FAU)})$, $H_2O/(SiO_{2\,(FAU)})$, $R/(SiO_{2\,(FAU)})$, $M_{2/n}O/(SiO_{2\,(FAU)})$, de la composition du mélange réactionnel.

Il peut être avantageux de mettre en oeuvre un mûrissement du mélange réactionnel avant la cristallisation hydrothermale au cours de ladite étape i) du procédé de l'invention afin de contrôler la taille des cristaux d'un matériau composite zéolithique AFX-BEA. Ledit mûrissement favorise également la formation dudit matériau composite zéolithique AFX-BEA au détriment d'impuretés. Le mûrissement du mélange réactionnel au cours de ladite étape i) du procédé de l'invention peut être réalisé à température ambiante ou à une température comprise entre 20 et 100°C avec ou sans agitation, pendant une durée avantageusement comprise entre 30 minutes et 48 heures.

## L'étape ii) de traitement hydrothermal

Le procédé de préparation selon l'invention comprend une étape ii) de traitement hydrothermal dudit gel précurseur obtenu à l'issue de l'étape i), éventuellement mûri, à une température comprise entre 120°C et 220°C, pendant une durée comprise entre 12 heures et 15 jours, jusqu'à ce que ledit matériau composite AFX-BEA se forme, c'est-à-dire jusqu'à cristallisation, de préférence complète, dudit matériau composite. Selon l'invention, cette étape ii) de traitement hydrothermal peut également être appelée étape de cristallisation, étape de réaction ou encore étape de synthèse.

Selon l'invention, la cristallisation est considérée comme complète dès que plus aucune présence de produit amorphe ou de zéolithe FAU n'est détectée par analyse DRX d'un échantillon du milieu réactionnel extrait lors de la synthèse.

Conformément à l'étape (ii) du procédé selon l'invention, le gel précurseur obtenu à l'issue de l'étape i) est soumis à un traitement hydrothermal, réalisé à une température comprise entre 120°C et 220°C, de préférence entre 150°C et 195°C. La durée nécessaire pour obtenir la cristallisation, de préférence complète, varie entre 12 heures et 15 jours, de préférence entre 12 heures et 12 jours, et de manière plus préférée entre 12 heures et 8 jours.

Avantageusement, le traitement hydrothermal est réalisé sous une pression de réaction autogène, éventuellement en ajoutant du gaz, par exemple de l'azote.

La mise en réaction s'effectue généralement sous agitation ou en absence d'agitation, de préférence sous agitation. Tout système d'agitation connu par l'homme de métier peut être utilisé, par exemple, des pales inclinées avec des contre-pales, des turbines d'agitation, des vis d'Archimède.

A la fin de la réaction, la phase solide formée est de préférence filtrée, lavée puis séchée. Le séchage est généralement réalisé à une température comprise entre 20 et 150°C, de préférence entre 60 et 100°C, pendant une durée comprise entre 5 et 24 heures.

La perte au feu dudit matériau composite AFX-BEA obtenu après séchage et avant l'éventuelle étape de calcination est généralement comprise entre 5 et 15% poids.

Selon l'invention, on entend par perte au feu (PAF) le pourcentage de perte de masse subie par un composé solide, un mélange de composés solides ou une pâte, en particulier par le matériau composite préparé selon l'invention, lors d'un traitement thermique à 1000°C pendant 2 heures, dans un four statique (type four à moufle), par rapport à la masse du composé solide, du mélange de composés solides ou de la pâte initial(e), en particulier par rapport à la masse du matériau composite séché testé. La perte au feu correspond en général à la perte de solvant (tel que l'eau) contenu dans les solides mais aussi à l'élimination de composés organiques contenus dans les constituants solides minéraux.

Avantageusement, le solide obtenu à l'issue de l'étape ii) du procédé selon l'invention, de préférence lavé et séché, peut ensuite être calciné. L'étape de calcination dudit matériau composite AFX-BEA obtenu selon le procédé de l'invention est préférentiellement réalisée à une température comprise entre 450 et 700°C pendant une durée comprise entre 2 et 20 heures. La calcination peut être précédée d'une montée en température progressive.

Le solide obtenu à l'issue de l'étape de calcination, avantageusement composé du matériau composite AFX-BEA, est dépourvu de toute espèce organique et en particulier du structurant organique R.

Le matériau composite zéolithique AFX-BEA, obtenu en fin d'étape ii) du procédé selon l'invention, de préférence lavé et séché et éventuellement calciné, est généralement analysée par diffraction des rayons X. La diffraction des rayons X permet de vérifier que le solide obtenu est bien le matériau composite zéolithique attendu. Cette technique permet également de déterminer la proportion massique du mélange des zéolithes AFX et BEA dans ledit matériau composite selon l'invention ou obtenu par le procédé de l'invention. Avantageusement, la proportion massique des zéolithes AFX et BEA du matériau composite obtenu est supérieure ou égale à 90%, de préférence supérieure ou égale à 95%, préférentiellement supérieure ou égale à 98% et d'une manière encore plus préféré supérieure ou égale à 99,8%. En d'autres termes, le matériau composite zéolithique obtenu comprend moins de 10% massique, de préférence moins de 5% massique, préférentiellement moins de 1% massique et de manière encore plus préférée moins de 0,2% massique d'impuretés et/ou de phase cristalline ou amorphe autre que AFX et BEA (les bornes n'étant pas incluses). De manière très avantageuse, le procédé de l'invention conduit à la formation d'un matériau composite AFX-BEA, exempt de toute autre phase cristalline ou amorphe.

Cette technique permet aussi de déterminer les proportions relatives de chaque zéolithe, AFX et BEA, contenue dans ledit matériau composite selon l'invention ou obtenu par le procédé de l'invention.

Avantageusement, le solide obtenu par le procédé selon l'invention présente le diagramme de diffraction de rayons X incluant au moins les raies inscrites dans le Tableau 1.

Ce diagramme de diffraction est obtenu par analyse radiocristallographique au moyen d'un diffractomètre en utilisant la méthode classique des poudres avec le rayonnement $K\alpha_1$ du cuivre ($\lambda$ = 1,5406Å). A partir de la position des pics de diffraction représentée par l'angle $2\theta$, on calcule, par la relation de Bragg, les équidistances réticulaires $d_{hkl}$ caractéristiques de l'échantillon. L'erreur de mesure $\Delta(d_{hkl})$ sur $d_{hkl}$ est calculée grâce à la relation de Bragg en fonction de l'erreur absolue $\Delta(2\theta)$ affectée à la mesure de $2\theta$. Une erreur absolue $\Delta(2\theta)$ égale à $\pm$ 0,02° est communément admise. L'intensité relative $I_{rel}$ affectée à chaque valeur de $d_{hkl}$ est mesurée d'après la hauteur du pic de diffraction correspondant. Le diagramme de diffraction des rayons X du solide cristallisé obtenu à l'issue de l'étape ii) du procédé selon l'invention comporte au moins les raies aux valeurs de $d_{hkl}$ données dans le Tableau 1. Dans la colonne des $d_{hkl}$, on a indiqué les valeurs moyennes des distances inter-réticulaires en Angströms (Å). Chacune de ces valeurs doit être affectée de l'erreur de mesure $\Delta(d_{hkl})$ comprise entre $\pm$ 0,6Å et $\pm$ 0,01Å.

Tableau 1 : Valeurs moyennes des $d_{hkl}$ et intensités relatives mesurées sur un diagramme de diffraction de rayons X du matériau composite zéolithique selon l'invention

| 2 thêta (°) | dhkl (Å) | Irel | 2 thêta (°) | dhkl (Å) | Irel |
|---|---|---|---|---|---|
| 7,49 | 11,79 | ff-f | 26,11 | 3,41 | f-m |
| 7,71 | 11,46 | ff-f | 26,94 | 3,31 | ff |
| 8,71 | 10,14 | mf-m | 27,11 | 3,29 | ff |
| 11,66 | 7,59 | f-mf | 27,61 | 3,23 | ff |
| 12,97 | 6,82 | f | 28,04 | 3,18 | mf-m |
| 15,00 | 5,90 | ff | 28,68 | 3,11 | ff |
| 15,40 | 5,75 | ff | 29,51 | 3,03 | ff |
| 15,66 | 5,66 | f-mf | 30,19 | 2,96 | ff-f |
| 17,47 | 5,07 | mf | 30,58 | 2,92 | mf |
| 17,90 | 4,95 | f-mf | 30,99 | 2,88 | ff |
| 19,42 | 4,57 | ff | 31,59 | 2,83 | f-mf |
| 19,88 | 4,46 | ff-f | 32,50 | 2,75 | ff |
| 20,38 | 4,36 | F-FF | 33,73 | 2,66 | f-mf |
| 21,08 | 4,21 | f | 34,29 | 2,61 | ff |
| 21,31 | 4,17 | ff-f | 34,78 | 2,58 | ff |
| 21,82 | 4,07 | F-FF | 35,11 | 2,55 | ff |
| 22,19 | 4,00 | f-m | 35,79 | 2,51 | ff |
| 22,34 | 3,98 | f-FF | 37,56 | 2,39 | ff |
| 22,54 | 3,94 | ff-f | 38,00 | 2,37 | ff |
| 22,70 | 3,91 | ff-f | 39,18 | 2,30 | ff |
| 23,67 | 3,76 | mf | 39,61 | 2,30 | ff |
| 25,24 | 3,52 | ff | | | |

où FF = très fort ; F = fort ; m = moyen ; mf = moyen faible ; f = faible ; ff = très faible. L'intensité relative $I_{rel}$ est donnée en rapport à une échelle d'intensité relative où il est attribué une valeur de 100 à la raie la plus intense du diagramme de diffraction des rayons X : ff < 15 ; 15 ≤ f < 30 ; 30 ≤ mf < 50 ; 50 ≤ m < 65 ; 65 ≤ F < 85 ; FF ≥ 85 ; 1 ≤ ff-f < 30 ; 30 ≤ mf-m < 65 ; 15 ≤ f-mf < 50 ; 65 ≤ F-FF ≤ 100 ; 15 ≤ f-m < 65 ; 15 ≤ f-FF ≤ 100.

Selon l'invention, la composition massique du matériau composite préparé, en particulier les fractions massiques relatives des zéolithes de type structural AFX et de type structural BEA présentes dans ledit matériau composite, est avantageusement déterminée à l'aide d'une méthode semblable à la norme ASTM D3906 03, par comparaison des surfaces des pics aux angles (2θ) 20,38 ± 0,1 (hkl : 211) ; 23,67 ± 0,1 (hkl : 105) ; 26,1 ± 0,1 (hkl : 303) et 28,02 ± 0,1 (hkl : 106) des diagrammes des rayons X obtenus pour le matériau composite selon l'invention et une zéolithe de type structural AFX de référence, de préférence de haute pureté. Le rapport massique des deux zéolithes AFX et BEA dans le matériau composite selon l'invention est ainsi évalué en comparant la somme des surface des pics aux angles (2θ) cités ci-avant obtenue pour le matériau composite préparé selon l'invention avec un échantillon de référence de zéolithe et en utilisant la formule de calcul suivante :

$$AFX/BEA = S_{AFXc}/(S_{AFXr} - S_{AFXc})$$

où $S_{AFXc}$ est la somme des surfaces des pics présents aux angles (2θ) 20,38 ± 0,1 (hkl : 211) ; 23,67 ± 0,1 (hkl : 105) ; 26,1 ± 0,1 (hkl : 303) et 28,02 ± 0,1 (hkl : 106) du diffractogramme du matériau composite AFX-BEA préparé selon l'invention et $S_{AFXr}$ est la somme des surfaces des pics présents aux angles (2θ) : 20,38 (hkl : 211) ; 23,67 (hkl : 105) ; 26,1 (hkl : 303) et 28,02 (hkl : 106) du diffractogramme de la zéolithe de type structural AFX pure, utilisée comme référence. La zéolithe de type structural AFX pure, utilisée comme référence, peut, par exemple, être préparée selon le procédé illustré dans l'exemple 7 de la présente divulgation.

La spectrométrie de fluorescence des rayons X (FX) peut avantageusement être utilisée pour déterminer la présence et la quantification d'éléments dans le matériau composite. La spectrométrie de fluorescence des rayons X (FX) est une technique d'analyse chimique utilisant une propriété physique de la matière, la fluorescence de rayons X. Elle permet l'analyse de la majorité des éléments chimiques a partir du Béryllium (Be) dans des gammes de concentration allant de quelques ppm à 100%, avec des résultats précis et reproductibles. On utilise les rayons X pour exciter les atomes qui sont dans l'échantillon, ce qui leur fait émettre des rayons X à énergie caractéristique de chaque élément présent. L'intensité et l'énergie de ces rayons X sont ensuite mesurées pour déterminer la concentration des éléments, par exemple Si et Al, dans le matériau composite.

Il est également avantageux d'obtenir la forme protonée du matériau composite zéolithique AFX-BEA obtenu par le procédé selon l'invention. Ladite forme hydrogène peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension du ledit matériau composite zéolithique AFX-BEA en une ou plusieurs fois avec la solution d'échange d'ions. Ledit matériau composite zéolithique AFX-BEA peut être calcinée avant ou après l'échange d'ions, ou entre deux étapes d'échange d'ions. Le matériau composite zéolithique AFX-BEA est, de préférence, calcinée avant l'échange d'ions, afin d'éliminer toute substance organique incluse dans la porosité du matériau composite zéolithique AFX-BEA, dans la mesure où l'échange d'ions s'en trouve facilité.

Ledit matériau composite AFX-BEA obtenu, de préférence après l'étape de séchage et après l'éventuelle étape de calcination, est prêt pour des étapes ultérieures, par exemple l'échange d'ions. Pour ces étapes, toutes les méthodes conventionnelles connues de l'homme du métier peuvent être employées.

Le matériau composite zéolithique AFX-BEA obtenu par le procédé de l'invention peut être utilisé après échange ionique comme solide acide pour la catalyse dans les domaines du raffinage et de la pétrochimie. Il peut également être utilisé comme adsorbant ou comme tamis moléculaire.

**FIGURES**

La Figure 1 représente les formules chimiques des composés organiques azotés spécifiques qui peuvent être choisis comme structurant dans le procédé de synthèse selon l'invention.

La Figure 2 représente le diagramme de diffraction de rayons X du matériau composite selon l'invention, composé d'une zéolithe de type structural AFX et d'une zéolithe de type structural BEA, obtenu selon l'exemple 3.

La Figure 3 représente un cliché au Microscope Electronique à Balayage (MEB) du matériau composite selon l'invention, composé d'un mélange d'une zéolithe de type structural AFX et d'une zéolithe de type structural BEA, obtenu selon l'exemple 3.

La Figure 4 représente le diagramme de diffraction de rayons X de la zéolithe de type structural AFX pure, obtenue selon l'exemple 7.

L'invention est illustrée par les exemples suivants qui ne présentent, en aucun cas, un caractère limitatif.

**EXEMPLES**

L'invention est illustrée par les exemples suivants qui ne présentent, en aucun cas, un caractère limitatif.

**Exemple 1:** préparation du dihydroxyde de 1,6-bis(méthylpiperidinium)hexane (structurant R).

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 heures. Le mélange est ensuite refroidi à température ambiante puis filtré. Le mélange est versé dans 300 mL de diéthyléther froid puis le précipité formé est filtré et lavé avec 100 mL de diéthyléther. Le solide obtenu est recristallisé dans un mélange éthanol/éther. Le solide obtenu est séché sous vide pendant 12 heures. On obtient 71 g d'un solide blanc (soit un rendement de 80%).

Le produit possède le spectre RMN $^1$H attendu. RMN $^1$H ($D_2O$, ppm/TMS) : 1,27 (4H,m) ; 1,48 (4H,m) ; 1,61 (4H,m) ; 1,70 (8H,m) ; 2,85 (6H,s) ; 3,16 (12H,m). Ce spectre RMN $^1$H correspond à celui du dibromure de 1,6-bis(méthylpiperidinium)hexane.

18,9 g d'$Ag_2O$ (0,08 mole, 99%, Aldrich) sont ajoutés dans un bécher en téflon de 250 ml contenant 30 g du dibromure de 1,6-bis(méthylpiperidinium)hexane (0,07 mole) préparé et 100 mL d'eau déionisée. Le milieu réactionnel est agité à l'abri de la lumière pendant 12 heures. Le mélange est ensuite filtré. Le filtrat obtenu est composé d'une solution aqueuse de dihydroxyde de 1,6-bis(méthylpiperidinium)hexane. Le dosage de cette espèce est réalisé par RMN du proton en utilisant l'acide formique en tant qu'étalon.

**Exemple 2:** préparation d'un matériau composite AFX-BEA selon l'invention.

0,013 g d'une zéolithe de type structural FAU (CBV600 Zeolyst, $SiO_2/Al_2O_3$= 5,46, PAF = 12,65) ont été mélangés avec 4,887 g d'eau déionisée. 0,773 g d'une zéolithe de type structural FAU (CBV720 Zeolyst, $SiO_2/Al_2O_3$= 33,52, PAF = 6,63, $P_{ze}$ = 3321) sont ajoutés au mélange précédent, la préparation obtenue est maintenue sous agitation pendant 10 minutes. 2,900 g d'une solution aqueuse de dihydroxyde de 1,6-bis(méthylpiperidinium)hexane (20,91% en poids) préparé selon l'exemple 1, sont ajoutés au mélange précédent. Le mélange est alors maintenu sous agitation pendant 10 minutes. Par la suite, 0,429 g d'une solution aqueuse à 20% en poids d'hydroxyde de sodium (solution préparée à partir d'hydroxyde de sodium à 98% en poids, d'Aldrich) sont incorporés dans le mélange qui est maintenu sous agitation pendant encore une demi-heure. La composition molaire du gel précurseur est la suivante: 60 $SiO_2$: 1.9 $Al_2O_3$: 10 R(OH)$_2$: 5.6 $Na_2O$: 2204 $H_2O$, soit un ratio $SiO_2/Al_2O_3$ de 31,6.

Le gel précurseur est ensuite transféré, après homogénéisation dans un autoclave. L'autoclave est fermé puis chauffé pendant 2 jours à 180°C sous agitation à 35 tr/min avec un système tourne-broche. Le produit cristallisé obtenu est filtré, lavé à l'eau déionisée puis séché une nuit à 100°C. La perte au feu (PAF) du solide séché, évaluée après à 1000°C pendant 2 heures, est de 9,5%.

Le solide est ensuite introduit dans un four à moufle où est réalisée une étape de calcination sous air: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué par un mélange d'environ 30% massique d'une zéolithe de type structural AFX et 70% massique d'une zéolithe de type structural BEA. Le mélange AFX-BEA représente environ 100% massique du produit obtenu.

**Exemple 3:** préparation d'un matériau composite AFX-BEA selon l'invention.

0,013 g d'une zéolithe de type structural FAU (CBV600 Zeolyst, $SiO_2/Al_2O_3$= 5,46, PAF = 12,65) ont été mélangés avec 4,887 g d'eau déionisée. 0,773 g d'une zéolithe de type structural FAU (CBV720 Zeolyst, $SiO_2/Al_2O_3$= 33,52, PAF = 6,63, $P_{ze}$ = 3321) sont ajoutés au mélange précédent, la préparation obtenue est maintenue sous agitation pendant 10 minutes. 2,900 g d'une solution aqueuse de dihydroxyde de 1,6-bis(méthylpiperidinium)hexane (20,91% en poids) préparé selon l'exemple 1, sont ajoutés au mélange précédent. Le mélange est alors maintenu sous agitation pendant 10 minutes. Par la suite, 0,429 g d'une solution aqueuse à 20% en poids d'hydroxyde de sodium (solution préparée à partir d'hydroxyde de sodium à 98% en poids, d'Aldrich) sont incorporés dans le mélange qui est maintenu sous agitation pendant encore une demi-heure. La composition molaire du gel précurseur est la suivante: 60 $SiO_2$: 1.9

Al$_2$O$_3$: 10 R(OH)$_2$: 5.6 Na$_2$O: 2204 H$_2$O, soit un ratio SiO$_2$/Al$_2$O$_3$ de 31,6.

Le gel précurseur est ensuite transféré, après homogénéisation dans un autoclave. L'autoclave est fermé puis chauffé pendant 6 jours à 170°C sous agitation à 35 tr/min avec un système tourne-broche. Le produit cristallisé obtenu est filtré, lavé à l'eau déionisée puis séché une nuit à 100°C. La perte au feu (PAF) du solide séché, évaluée après à 1000°C pendant 2 heures, est de 9,8%.

Le solide est ensuite introduit dans un four à moufle où est réalisée une étape de calcination sous flux d'air: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

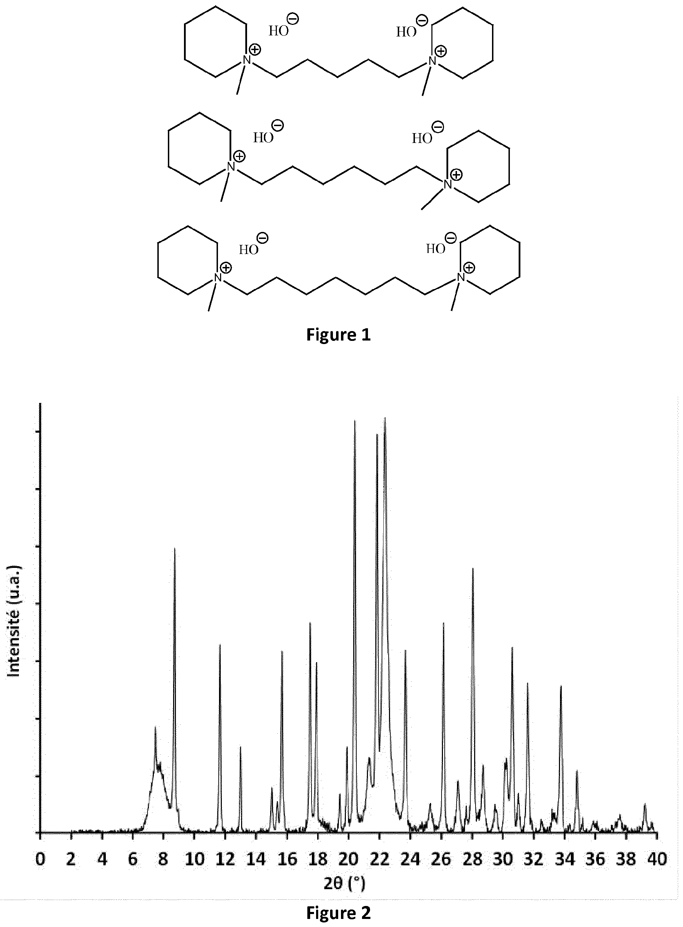

Le produit solide calciné a été analysé par diffraction des rayons X et identifié comme étant constitué par un mélange d'environ 50% massique d'une zéolithe de type structural AFX et 50% massique d'une zéolithe de type structural BEA. Le mélange AFX-BEA représente environ 100% massique du produit obtenu. Le diagramme de diffraction de rayons X effectué sur le solide calciné est donné sur la Figure 2. Le rapport molaire SiO$_2$/Al$_2$O$_3$ de ce matériau déterminée par FX est de 20,04.

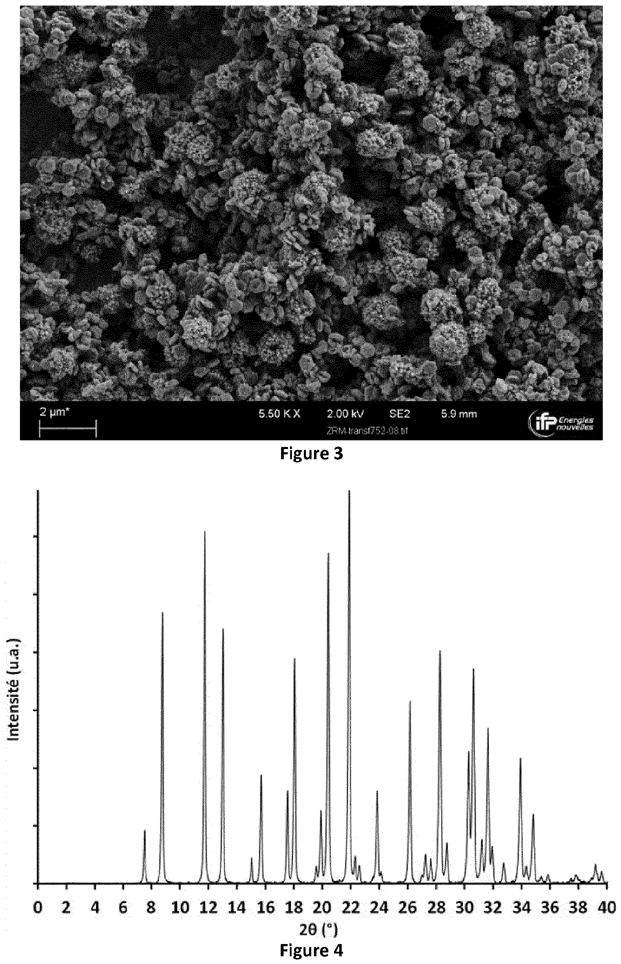

Le matériau composite obtenu est analysé par microscopie électronique à balayage (MEB). La Figure 3 présente l'image MEB du matériau composite obtenu.

**Exemple 4:** préparation d'un matériau composite AFX-BEA selon l'invention.

0,239 g d'une zéolithe de type structural FAU (CBV712 Zeolyst, SiO$_2$/Al$_2$O$_3$= 11,42, PAF = 12,81) ont été mélangés avec 4,952 g d'eau déionisée. 0,573 g d'une zéolithe de type structural FAU (CBV780 Zeolyst, SiO$_2$/Al$_2$O$_3$= 98,22, PAF = 8,52, P$_{ze}$ = 7170) sont ajoutés au mélange précédent, la préparation obtenue est maintenue sous agitation pendant 10 minutes. 2,905 g d'une solution aqueuse de dihydroxyde de 1,6-bis(méthylpiperidinium)hexane (20,91% en poids) préparé selon l'exemple 1, sont ajoutés au mélange précédent. Le mélange est alors maintenu sous agitation pendant 10 minutes. 0,330 g d'une solution aqueuse à 20% en poids d'hydroxyde de sodium (solution préparée à partir d'hydroxyde de sodium à 98% en poids, Aldrich) sont ajoutés dans le mélange et maintenu sous agitation pendant 10 minutes. La composition molaire du gel précurseur est la suivante: 60 SiO$_2$: 1,8 Al$_2$O$_3$: 10 R(OH)$_2$: 4,3 Na$_2$O: 2204 H$_2$O, soit un ratio SiO$_2$/Al$_2$O$_3$ de 33,3.

Le gel précurseur est ensuite transféré, après homogénéisation dans un autoclave. L'autoclave est fermé puis chauffé pendant 6 jours à 180°C sous agitation à 35 tr/min avec un système tourne-broche. Le produit cristallisé obtenu est filtré, lavé à l'eau déionisée puis séché une nuit à 100°C. La perte au feu (PAF) du solide séché, évaluée après à 1000°C pendant 2 heures, est de 10,1%.

Le solide est ensuite introduit dans un four à moufle où est réalisée une étape de calcination sous flux d'air: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué par un mélange d'environ 50% massique d'une zéolithe de type structural AFX et 50% massique d'une zéolithe de type structural BEA. Le mélange AFX-BEA représente environ 100% massique du produit obtenu.

**Exemple 5:** préparation d'un matériau composite AFX-BEA selon l'invention .

0,030 g d'une zéolithe de type structural FAU (CBV712 Zeolyst, SiO$_2$/Al$_2$O$_3$= 11,42, PAF = 12,81%) ont été mélangés avec 5,231 g d'eau déionisée. 0,758 g d'une zéolithe de type structural FAU (CBV720 Zeolyst, SiO$_2$/Al$_2$O$_3$= 33,52, PAF = 6,63%, P$_{ze}$ = 3261) sont ajoutés au mélange précédent, la préparation obtenue est maintenue sous agitation pendant 10 minutes. 2,900 g d'une solution aqueuse de dihydroxyde de 1,6-bis(méthylpiperidinium)hexane (20,91% en poids) préparé selon l'exemple 1, sont ajoutés au mélange précédent. Le mélange est alors maintenu sous agitation pendant 10 minutes. Par la suite, 0,086 g d'hydroxyde de sodium (pureté à 98% en poids, Aldrich) sont incorporés dans le mélange qui est maintenu sous agitation pendant encore une demi-heure. La composition molaire du gel précurseur est la suivante: 60 SiO$_2$: 1,9 Al$_2$O$_3$: 10 R(OH)$_2$: 5,6 Na$_2$O: 2204 H$_2$O, soit un ratio SiO$_2$/Al$_2$O$_3$ de 31,6.

Le gel précurseur est ensuite transféré, après homogénéisation dans un autoclave. L'autoclave est fermé puis chauffé pendant 3 jours à 170°C sous agitation à 35 tr/min avec un système tourne-broche. Le produit cristallisé obtenu est filtré, lavé à l'eau déionisée puis séché une nuit à 100°C. La perte au feu (PAF) du solide séché, évaluée après à 1000°C pendant 2 heures, est de 9,8%.

Le solide est ensuite introduit dans un four à moufle où est réalisée une étape de calcination sous flux d'air: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué par un mélange d'environ 30% massique d'une zéolithe de type structural AFX et 70% massique d'une zéolithe de type structural BEA. Le mélange AFX-BEA représente environ 100% massique du produit obtenu.

**Exemple 6:** préparation d'un matériau composite AFX-BEA selon l'invention.

0,030 g d'une zéolithe de type structural FAU (CBV712 Zeolyst, $SiO_2/Al_2O_3$= 11,42, PAF = 12,81%) ont été mélangés avec 5,231 g d'eau déionisée. 0,758 g d'une zéolithe de type structural FAU (CBV720 Zeolyst, $SiO_2/Al_2O_3$= 33,52, PAF = 6,63%, $P_{ze}$ = 3261) sont ajoutés au mélange précédent, la préparation obtenue est maintenue sous agitation pendant 10 minutes. 2,900 g d'une solution aqueuse de dihydroxyde de 1,6-bis(méthylpiperidinium)hexane (20,91% en poids) préparé selon l'exemple 1, sont ajoutés au mélange précédent. Le mélange est alors maintenu sous agitation pendant 10 minutes. Par la suite, 0,086 g d'hydroxyde de sodium (pureté à 98% en poids, Aldrich) sont incorporés dans le mélange qui est maintenu sous agitation pendant encore une demi-heure. La composition molaire du gel précurseur est la suivante: 60 $SiO_2$: 1,9 $Al_2O_3$: 10 $R(OH)_2$: 5,6 $Na_2O$: 2204 $H_2O$, soit un ratio $SiO_2/Al_2O_3$ de 31,6.

Le gel précurseur est ensuite transféré, après homogénéisation dans un autoclave. L'autoclave est fermé puis chauffé pendant 2 jours à 180°C sous agitation à 35 tr/min avec un système tourne-broche. Le produit cristallisé obtenu est filtré, lavé à l'eau déionisée puis séché une nuit à 100°C. La perte au feu (PAF) du solide séché, évaluée après à 1000°C pendant 2 heures, est de 10,1%.

Le solide est ensuite introduit dans un four à moufle où est réalisée une étape de calcination sous flux d'air: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué par un mélange d'environ 35% massique d'une zéolithe de type structural AFX et 65% massique d'une zéolithe de type structural BEA. Le mélange AFX-BEA représente 99% massique du produit obtenu.

**Exemple 7:** préparation d'une zéolithe de type structural AFX pure.

0,179 g d'une zéolithe de type structural FAU (CBV600 Zeolyst, $SiO_2/Al_2O_3$= 5,46, PAF = 12,65%) ont été mélangés avec 4,86 g d'eau déionisée. 0,643 g d'une zéolithe de type structural FAU (CBV720 Zeolyst, $SiO_2/Al_2O_3$= 33,52, PAF = 6,63%) sont ajoutés au mélange précédent, la préparation obtenue est maintenue sous agitation pendant 10 minutes. 2,891 g d'une solution aqueuse de dihydroxyde de 1,6-bis(méthylpiperidinium)hexane (20,91% en poids) préparé selon l'exemple 1, sont additionnés au mélange précédent, et la préparation est maintenue sous agitation pendant 10 minutes. Par la suite, 0,428 g d'une solution aqueuse à 20% en poids d'hydroxyde de sodium solide de pureté 98% en poids (Aldrich) ont été incorporés dans le mélange de synthèse qui est maintenu sous agitation pendant une demi-heure. La composition molaire du mélange est la suivante: 60 $SiO_2$: 3,3 $Al_2O_3$: 10 R: 5,6 $Na_2O$: 2204 $H_2O$, soit un ratio $SiO_2/Al_2O_3$ de 18. Le gel précurseur est ensuite transféré, après homogénéisation dans un autoclave. L'autoclave est fermé puis chauffé pendant 6 jours à 180°C sous agitation à 35 tr/min avec un système tourne-broche. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe de type structural AFX pure, c'est-à-dire de pureté supérieure à 99,8% poids. Le diagramme de diffraction effectué sur le solide de type structural AFX calciné est donné sur la Figure 4. Le produit a un rapport molaire $SiO_2/Al_2O_3$ de 12,7 tel que déterminé par fluorescence X.

**Revendications**

1. Procédé de préparation d'un matériau composite zéolithique composé d'un mélange de zéolithes de type structural AFX et de type structural BEA, comprenant au moins les étapes suivantes :

   i) le mélange en milieu aqueux, d'une zéolithe FAU ayant un rapport molaire $SiO_2/Al_2O_3$ compris entre 30 et 100 avec au moins une zéolithe de type structural FAU ayant un ratio molaire $SiO_2/Al_2O_3$ compris entre 2 et 30 (borne supérieure exclue), et où le paramètre mathématique, $P_{ze}$, correspondant au pourcentage massique de la zéolithe FAU de rapport molaire $SiO_2/Al_2O_3$ compris entre 30 et 100, sous sa forme anhydre (exprimé en %) dans le mélange de zéolithes FAU, multiplié par le rapport molaire $SiO_2/Al_2O_3$ de ladite même zéolithe FAU

de rapport molaire $SiO_2/Al_2O_3$ compris entre 30 et 100, est tel que : $3250 < P_{ze} < 7200$, d'au moins un composé organique azoté R, choisi parmi le dihydroxyde de 1,5-bis(méthylpiperidinium) pentane, le dihydroxyde de 1,6-bis(méthylpiperidinium) hexane, le dihydroxyde de 1,7-bis(méthylpiperidinium) heptane et leurs mélanges, d'au moins une source d'au moins un métal alcalin et/ou métal alcalino-terreux M de valence n, n étant un nombre entier supérieur ou égal à 1, le mélange réactionnel présentant la composition molaire suivante :

| | |
|---|---|
| $(SiO_{2\ (FAU)})/(Al_2O_{3\ (FAU)})$ | compris entre 30 et 80, |
| $H_2O/(SiO_{2\ (FAU)})$ | compris entre 1 et 100, |
| $R/(SiO_{2\ (FAU)})$ | compris entre 0,01 à 0,6, |
| $M_{2/n}O/(SiO_{2\ (FAU)})$ | compris entre 0,005 à 0,45, |

dans laquelle $SiO_{2\ (FAU)}$ est la quantité molaire de $SiO_2$ apportée par l'ensemble des zéolithes de type structural FAU introduites dans le mélange, $Al_2O_{3\ (FAU)}$ est la quantité molaire de $Al_2O_3$ apportée par l'ensemble des zéolithes de type structural FAU introduites dans le mélange, $H_2O$ la quantité molaire d'eau présente dans le mélange réactionnel, R la quantité molaire dudit composé organique azoté, $M_{2/n}O$ étant la quantité molaire de $M_{2/n}O$ apportée par l'ensemble des zéolithes FAU et par la source de métal alcalin et/ou de métal alcalino-terreux, jusqu'à l'obtention d'un gel précurseur homogène;

ii) le traitement hydrothermal dudit gel précurseur obtenu à l'issue de l'étape i) à une température comprise entre 120°C et 220°C, pendant une durée comprise entre 12 heures et 15 jours.

2. Procédé selon la revendication précédente, dans lequel R est le dihydroxyde de 1,6-bis(méthylpiperidinium)hexane.

3. Procédé selon l'une des revendications précédentes, dans lequel le paramètre mathématique, $P_{ze}$, est tel que : $3350 < P_{ze} < 7100$.

4. Procédé selon l'une des revendications précédentes, dans lequel le ratio molaire $(SiO_{2\ (FAU)})/(Al_2O_{3\ (FAU)})$ est compris entre 32 et 70.

5. Procédé selon l'une des revendications précédentes, dans lequel le ratio molaire $R/(SiO_{2\ (FAU)})$ est compris entre 0,05 et 0,5.

6. Procédé selon l'une des revendications précédentes, dans lequel le ratio molaire $H_2O/(SiO_{2\ (FAU)})$ est compris entre 5 et 60.

7. Procédé selon l'une des revendications précédentes dans lequel le ratio molaire $M_{2/n}O/(SiO_{2\ (FAU)})$ est compris entre 0,01 et 0,25.

8. Procédé selon l'une des revendications précédentes, dans lequel M est choisi parmi le lithium, le potassium, le sodium, le magnésium et le calcium et le mélange d'au moins deux de ces métaux, M étant de préférence le sodium.

9. Procédé selon la revendication 8, dans lequel la source d'au moins un métal alcalin et/ou métal alcalino-terreux M est l'hydroxyde de sodium.

10. Procédé selon l'une des revendications précédentes, dans lequel l'étape i) est mise en oeuvre pendant une durée supérieure ou égale à 10 minutes et avantageusement pendant moins de 2 heures, en particulier moins de 1,5 heures, de préférence à température ambiante et de préférence sous agitation, à faible ou fort taux de cisaillement.

11. Procédé selon l'une des revendications précédentes, dans lequel on ajoute des germes cristallins d'une zéolithe de type structural AFX, d'une zéolithe de type structural BEA et/ou d'un matériau composite AFX-BEA, au mélange réactionnel de l'étape i), de préférence en quantité comprise entre 0,01 et 10% poids par rapport au poids total des sources de $SiO_2$ et d'$Al_2O_3$ considérés sous leur forme anhydre présentes dans ledit mélange.

12. Procédé selon l'une des revendications précédentes, dans lequel l'étape i) comprend une étape de mûrissement du mélange réactionnel à une température comprise entre 20 et 100°C, avec ou sans agitation, pendant une durée comprise entre 30 minutes et 48 heures.

13. Procédé selon l'une des revendications 1 à 12, dans lequel le traitement hydrothermal de l'étape ii) est réalisé sous pression autogène à une température comprise entre 120°C et 220°C, de préférence entre 150°C et 195°C, pendant une durée comprise entre 12 heures et 15 jours, de préférence entre 12 heures et 12 jours, et de manière plus préférée entre 12 heures et 8 jours.

14. Procédé selon l'une des revendications précédentes dans lequel la phase solide obtenue à l'issue de l'étape ii) est filtrée, lavée, et séchée à une température comprise entre 20 et 150°C, de préférence entre 60 et 100°C, pendant une durée comprise entre 5 et 24 heures pour obtenir une zéolithe séchée.

15. Procédé selon la revendication 14 dans lequel la zéolithe séchée est ensuite calcinée à une température comprise entre 450 et 700°C pendant une durée comprise entre 2 et 20 heures, la calcination pouvant être précédée d'une montée en température progressive.

16. Matériau composite zéolithique présentant une structure zéolithique composée d'un mélange intime de zéolithes de type structural AFX et de type structural BEA, ledit matériau composite étant préparé par synthèse directe et comprenant :

   - entre 30 et 90% massique, de préférence entre 40 et 90% massique, de zéolithe de type structural AFX, par rapport à la masse totale dudit matériau composite sous sa forme anhydre ;
   - entre 10 et 70% massique de zéolithe de type structural BEA, de préférence entre 10 et 60% massique, de zéolithe de type structural BEA, par rapport à la masse totale dudit matériau composite sous sa forme anhydre,

   et ledit matériau composite présentant un rapport molaire $SiO_2/Al_2O_3$ compris entre 2 et 100.

17. Matériau composite selon la revendication précédente, présentant un rapport molaire $SiO_2/Al_2O_3$ compris entre 4 et 90 et plus préférentiellement entre 6 et 80.

18. Matériau composite selon la revendication 16 ou 17, dans lequel la zéolithe de type structural BEA est de préférence une zéolithe beta contenant un mélange contenant entre 35 et 45% massique, de préférence 40% massique, de polymorphe A et entre 55 et 65% massique, de préférence 60% massique, de polymorphe B.

19. Matériau composite selon l'une des revendications 16 à 18 présentant un diagramme de diffraction de rayons X comprenant au moins les raies ayant les valeurs moyennes des $d_{hkl}$ et les intensités relatives suivantes :

| 2 thêta (°) | dhkl (Å) | Irel | 2 thêta (°) | dhkl (Å) | Irel |
|---|---|---|---|---|---|
| 7,49 | 11,79 | ff-f | 26,11 | 3,41 | f-m |
| 7,71 | 11,46 | ff-f | 26,94 | 3,31 | ff |
| 8,71 | 10,14 | mf-m | 27,11 | 3,29 | ff |
| 11,66 | 7,59 | f-mf | 27,61 | 3,23 | ff |
| 12,97 | 6,82 | f | 28,04 | 3,18 | mf-m |
| 15,00 | 5,90 | ff | 28,68 | 3,11 | ff |
| 15,40 | 5,75 | ff | 29,51 | 3,03 | ff |
| 15,66 | 5,66 | f-mf | 30,19 | 2,96 | ff-f |
| 17,47 | 5,07 | mf | 30,58 | 2,92 | mf |
| 17,90 | 4,95 | f-mf | 30,99 | 2,88 | ff |
| 19,42 | 4,57 | ff | 31,59 | 2,83 | f-mf |
| 19,88 | 4,46 | ff-f | 32,50 | 2,75 | ff |
| 20,38 | 4,36 | F-FF | 33,73 | 2,66 | f-mf |
| 21,08 | 4,21 | f | 34,29 | 2,61 | ff |
| 21,31 | 4,17 | ff-f | 34,78 | 2,58 | ff |

(suite)

| 2 thêta (°) | dhkl (Å) | Irel | 2 thêta (°) | dhkl (Å) | Irel |
|---|---|---|---|---|---|
| 21,82 | 4,07 | F-FF | 35,11 | 2,55 | ff |
| 22,19 | 4,00 | f-m | 35,79 | 2,51 | ff |
| 22,34 | 3,98 | f-FF | 37,56 | 2,39 | ff |
| 22,54 | 3,94 | ff-f | 38,00 | 2,37 | ff |
| 22,70 | 3,91 | ff-f | 39,18 | 2,30 | ff |
| 23,67 | 3,76 | mf | 39,61 | 2,30 | ff |
| 25,24 | 3,52 | ff | | | |
| où FF = très fort ; F = fort ; m = moyen ; mf = moyen faible ; f = faible ; ff = très faible. L'intensité relative $I_{rel}$ est donnée en rapport à une échelle d'intensité relative où il est attribué une valeur de 100 à la raie la plus intense du diagramme de diffraction des rayons X : ff < 15 ; 15 ≤ f < 30 ; 30 ≤ mf < 50 ; 50 ≤ m < 65 ; 65 ≤ F < 85 ; FF ≥ 85 ; 1 ≤ ff-f < 30 ; 30 ≤ mf-m < 65 ; 15 ≤ f-mf < 50 ; 65 ≤ F-FF ≤ 100; 15 ≤ f-m < 65; 15 ≤ f-FF ≤ 100. |||||||

## Patentansprüche

1. Verfahren zur Herstellung eines Zeolith-Verbundmaterials aus einer Mischung von Zeolithen vom AFX-Strukturtyp und vom BEA-Strukturtyp, das mindestens die folgenden Schritte umfasst:

i) Mischen eines FAU-Zeoliths mit einem $SiO_2/Al_2O_3$-Molverhältnis zwischen 30 und 100 mit mindestens einem Zeolith vom FAU-Strukturtyp mit einem $SiO_2/Al_2O_3$-Molverhältnis zwischen 2 und 30 (Obergrenze ausgeschlossen), wobei der mathematische Parameter $P_{ze}$, der dem Massenprozentanteil des FAU-Zeoliths mit einem $SiO_2/Al_2O_3$-Molverhältnis zwischen 30 und 100 in seiner wasserfreien Form (ausgedrückt in %) in der Mischung von FAU-Zeolithen multipliziert mit dem $SiO_2/Al_2O_3$-Molverhältnis des FAU-Zeoliths mit einem $SiO_2/Al_2O_3$-Molverhältnis zwischen 30 und 100 derart beschaffen ist, dass: 3250 < $P_{ze}$ < 7200, mindestens einer organischen Stickstoffverbindung R, ausgewählt aus 1,5-Bis-(methylpiperidinium)pentandihydroxid, 1,6-Bis-(methylpiperidinium)hexandihydroxid, 1,7-Bis-(methylpiperidinium)heptandihydroxid und Mischungen davon, und mindestens einer Quelle von mindestens einem Alkalimetall und/oder Erdalkalimetall M mit der Wertigkeit n, wobei n für eine ganze Zahl größer oder gleich 1 steht, in wässrigem Medium, wobei die Reaktionsmischung die folgende molare Zusammensetzung aufweist:

$(SiO_{2(FAU)})/(Al_2O_{3(FAU)})$    zwischen 30 und 80,
$H_2O/(SiO_{2(FAU)})$    zwischen 1 und 100,
$R/(SiO_{2(FAU)})$    zwischen 0,01 und 0,6,
$M_{2/n}O/(SiO_{2(FAU)})$    zwischen 0,005 und 0,45,

wobei $SiO_{2(FAU)}$ die von allen in die Mischung eingetragenen Zeolithen vom FAU-Strukturtyp bereitgestellte molare Menge von $SiO_2$ ist, $Al_2O_{3\,(FAU)}$ die von allen in die Mischung eingetragenen Zeolithen vom FAU-Strukturtyp bereitgestellte molare Menge von $Al_2O_3$ ist, $H_2O$ die in der Reaktionsmischung vorliegende molare Wassermenge ist, R die molare Menge der organischen Stickstoffverbindung ist, wobei $M_{2/n}O$ die von allen FAU-Zeolithen und von der Alkalimetall- und/oder Erdalkalimetallquelle bereitgestellte molare Menge von $M_{2/n}O$ ist, bis zum Erhalt eines homogenen Vorläufer Gels;
ii) hydrothermale Behandlung des am Ende von Schritt i) erhaltenen Vorläufergels bei einer Temperatur zwischen 120°C und 220°C über einen Zeitraum zwischen 12 Stunden und 15 Tagen.

2. Verfahren nach dem vorhergehenden Anspruch, wobei es sich bei R um 1,6-Bis(methylpiperidinium)hexan-dihydroxid handelt.

3. Verfahren nach einem der vorhergehenden Ansprüche, wobei der mathematische Parameter $P_{ze}$ derart beschaffen ist, dass: 3350 < $P_{ze}$ < 7100.

4. Verfahren nach einem der vorhergehenden Ansprüche, wobei das $(SiO_{2(FAU)})/(Al_2O_{3(FAU)})$ -Molverhältnis zwischen 32 und 70 liegt.

5. Verfahren nach einem der vorhergehenden Ansprüche, wobei das R/ $(SiO_{2(FAU)})$ -Molverhältnis zwischen 0,05 und 0,5 liegt.

6. Verfahren nach einem der vorhergehenden Ansprüche, wobei das $H_2O/(SiO_{2(FAU)})$-Molverhältnis zwischen 5 und 60 liegt.

7. Verfahren nach einem der vorhergehenden Ansprüche, wobei das $M_{2/n}O/ (SiO_{2(FAU)})$ -Molverhältnis zwischen 0,01 und 0,25 liegt.

8. Verfahren nach einem der vorhergehenden Ansprüche, wobei M aus Lithium, Kalium, Natrium, Magnesium und Calcium und einer Mischung von mindestens zwei dieser Metalle ausgewählt wird, wobei M vorzugsweise Natrium ist.

9. Verfahren nach Anspruch 8, wobei es sich bei der Quelle von mindestens einem Alkalimetall und/oder Erdalkalimetall M um Natriumhydroxid handelt.

10. Verfahren nach einem der vorhergehenden Ansprüche, wobei der Schritt i) über einen Zeitraum größer oder gleich 10 Minuten und vorteilhafterweise über einen Zeitraum von weniger als 2 Stunden, insbesondere weniger als 1,5 Stunden, vorzugsweise bei Raumtemperatur und vorzugsweise unter Rühren bei niedriger oder hoher Scherrate, durchgeführt wird.

11. Verfahren nach einem der vorhergehenden Ansprüche, bei dem man Kristallkeime eines Zeoliths vom AFX-Strukturtyp, eines Zeoliths vom BEA-Strukturtyp und/oder eines AFX-BEA-Verbundmaterials zu der Reaktionsmischung von Schritt i) gibt, vorzugsweise in einer Menge zwischen 0,01 und 10 Gew.-%, bezogen auf das Gesamtgewicht der Quellen von $SiO_2$ und $Al_2O_3$, die als in der Mischung in ihrer wasserfreien Form vorliegend betrachtet werden.

12. Verfahren nach einem der vorhergehenden Ansprüche, wobei der Schritt i) einen Schritt der Reifung der Reaktionsmischung bei einer Temperatur zwischen 20 und 100 °C mit oder ohne Rühren über einen Zeitraum zwischen 30 Minuten und 48 Stunden umfasst.

13. Verfahren nach einem der Ansprüche 1 bis 12, wobei die hydrothermale Behandlung von Schritt ii) unter autogenem Druck bei einer Temperatur zwischen 120 und 220°C, vorzugsweise zwischen 150 °C und 195°C, über einen Zeitraum zwischen 12 Stunden und 15 Tagen, vorzugsweise zwischen 12 Stunden und 12 Tagen und noch weiter bevorzugt zwischen 12 Stunden und 8 Tagen durchgeführt wird.

14. Verfahren nach einem der vorhergehenden Ansprüche, wobei die am Ende von Schritt ii) erhaltene feste Phase abfiltriert, gewaschen und bei einer Temperatur zwischen 20 und 150°C, vorzugsweise zwischen 60 und 100 °C, über einen Zeitraum zwischen 5 und 24 Stunden getrocknet wird, was einen getrockneten Zeolith ergibt.

15. Verfahren nach Anspruch 14, wobei der getrocknete Zeolith dann bei einer Temperatur zwischen 450 und 700 °C über einen Zeitraum zwischen 2 und 20 Stunden calciniert wird, wobei der Calcinierung eine allmähliche Temperatursteigerung vorgeschaltet sein kann.

16. Zeolith-Verbundmaterial mit einer Zeolithstruktur, die aus einer innigen Mischung von Zeolithen vom AFX-Strukturtyp und vom BEA-Strukturtyp besteht, wobei das Verbundmaterial durch Direktsynthese hergestellt wird und Folgendes umfasst:

   - zwischen 30 und 90 Massen-%, vorzugsweise zwischen 40 und 90 Massen-%, Zeolith vom AFX-Strukturtyp, bezogen auf die Gesamtmasse des Verbundmaterials in seiner wasserfreien Form;
   - zwischen 10 und 70 Massen-% Zeolith vom BEA-Strukturtyp, vorzugsweise zwischen 10 und 60 Massen-% Zeolith vom BEA-Strukturtyp, bezogen auf die Gesamtmasse des Verbundmaterials in seiner wasserfreien Form;

   wobei das Verbundmaterial ein $SiO_2/Al_2O_3$-Molverhältnis zwischen 2 und 100 aufweist.

17. Verbundmaterial nach dem vorhergehenden Anspruch mit einem $SiO_2/Al_2O_3$-Molverhältnis zwischen 4 und 90 und weiter bevorzugt zwischen 6 und 80.

**18.** Verbundmaterial nach Anspruch 16 oder 17, wobei es sich bei dem Zeolith vom BEA-Strukturtyp vorzugsweise um einen Beta-Zeolith handelt, der ein Gemisch enthält, das zwischen 35 und 45 Massen-%, vorzugsweise 40 Massen-%, Polymorph A und zwischen 55 und 65 Massen-%, vorzugsweise 60 Massen-%, Polymorph B enthält.

**19.** Verbundmaterial nach einem der Ansprüche 16 bis 18 mit einem Röntgenbeugungsdiagramm, das mindestens die Linien mit den folgenden mittleren $d_{hkl}$-Werten und den folgenden relativen Intensitäten umfasst:

| 2 theta (°) | dhkl (Å) | Irel | 2 theta (°) | dhkl (Å) | Irel |
|---|---|---|---|---|---|
| 7,49 | 11,79 | vw-w | 26,11 | 3,41 | w-m |
| 7,71 | 11,46 | vw-w | 26,94 | 3,31 | vw |
| 8,71 | 10,14 | mw-m | 27,11 | 3,29 | vw |
| 11,66 | 7,59 | w-mw | 27,61 | 3,23 | vw |
| 12,97 | 6,82 | w | 28,04 | 3,18 | mw-m |
| 15,00 | 5,90 | vw | 28,68 | 3,11 | vw |
| 15,40 | 5,75 | vw | 29,51 | 3,03 | vw |
| 15,66 | 5,66 | w-mw | 30,19 | 2,96 | vw-w |
| 17,47 | 5,07 | mw | 30,58 | 2,92 | mw |
| 17,90 | 4,95 | w-mw | 30,99 | 2,88 | vw |
| 19,42 | 4,57 | vw | 31,59 | 2,83 | w-mw |
| 19,88 | 4,46 | vw-w | 32,50 | 2,75 | vw |
| 20,38 | 4,36 | S-VS | 33,73 | 2,66 | w-mw |
| 21,08 | 4,21 | w | 34,29 | 2,61 | vw |
| 21,31 | 4,17 | vw-w | 34,78 | 2,58 | vw |
| 21,82 | 4,07 | S-VS | 35,11 | 2,55 | vw |
| 22,19 | 4,00 | w-m | 35,79 | 2,51 | vw |
| 22,34 | 3,98 | w-VS | 37,56 | 2,39 | vw |
| 22,54 | 3,94 | vw-w | 38,00 | 2,37 | vw |
| 22,70 | 3,91 | vw-w | 39,18 | 2,30 | vw |
| 23,67 | 3,76 | mw | 39,61 | 2,30 | vw |
| 25,24 | 3,52 | vw | | | |

wobei VS = sehr stark; S = stark; m = mittel; mw = mittelschwach; w = schwach; vw = sehr schwach, wobei die relative Intensität $I_{rel}$ bezogen auf eine Skala der relativen Intensität angegeben ist, in der der intensivsten Linie des Röntgenbeugungsdiagramms ein Wert von 100 zugeordnet wird: vw < 15; 15 ≤ w < 30; 30 ≤ mw < 50; 50 ≤ m < 65; 65 ≤ S < 85; VS ≥ 85; 1 ≤ vw-w < 30; 30 ≤ mw-m < 65; 15 ≤ w-mw <50; 65 ≤ S-VS ≤ 100; 15 ≤ w-m < 65; 15 ≤ w-VS ≤ 100.

**Claims**

**1.** Process for preparing a zeolite composite material composed of a mixture of zeolites of AFX structure type and of BEA structure type, comprising at least the following steps:

i) mixing, in aqueous medium, of a FAU zeolite having a $SiO_2/Al_2O_3$ mole ratio of between 30 and 100 with at least one zeolite of FAU structure type having a $SiO_2/Al_2O_3$ mole ratio of between 2 and 30 (upper limit excluded), and in which the mathematical parameter, $P_{ze}$, corresponding to the mass percentage of the FAU zeolite with an $SiO_2/Al_2O_3$ mole ratio of between 30 and 100, in its anhydrous form (expressed in %) in the mixture of FAU zeolites, multiplied by the $SiO_2/Al_2O_3$ mole ratio of said same FAU zeolite with an $SiO_2/Al_2O_3$ mole ratio of

between 30 and 100, is such that: 3250 < $P_{ze}$ < 7200, of at least one organonitrogen compound R, chosen from 1,5-bis(methyl-piperidinium)pentane dihydroxide, 1,6-bis(methylpiperidinium)hexane dihydroxide, 1,7-bis(methylpiperidinium)heptane dihydroxide, and mixtures thereof, and of at least one source of at least one alkali metal and/or alkaline-earth metal M of valency n, n being an integer greater than or equal to 1, the reaction mixture having the following molar composition:

| | |
|---|---|
| $(SiO_{2\,(FAU)}) / (Al_2O_{3\,(FAU)})$ | of between 30 and 80, |
| $H_2O / (SiO_{2\,(FAU)})$ | of between 1 and 100, |
| $R / (SiO_{2\,(FAU)})$ | of between 0.01 and 0.6, |
| $M_{2/n}O / (SiO_{2\,(FAU)})$ | of between 0.005 and 0.45, |

in which $SiO_{2\,(FAU)}$ is the molar amount of $SiO_2$ provided by all the zeolites of FAU structure type introduced into the mixture, $Al_2O_{3\,(FAU)}$ is the molar amount of $Al_2O_3$ introduced by all the zeolites of FAU structure type introduced into the mixture, $H_2O$ the molar amount of water present in the reaction mixture, R the molar amount of said organonitrogen compound, $M_{2/n}O$ being the molar amount of $M_{2/n}O$ provided by all the FAU zeolites and by the source of alkali metal and/or alkaline-earth metal, up to the production of a homogeneous precursor gel;

ii) hydrothermal treatment of said precursor gel obtained from step i) at a temperature of between 120°C and 220°C, for a time of between 12 hours and 15 days.

2. Process according to the preceding claim, in which R is 1,6-bis(methylpiperidinium)hexane dihydroxide.

3. Process according to one of the preceding claims, in which the mathematical parameter $P_{ze}$ is such that: 3350 < $P_{ze}$ < 7100.

4. Process according to one of the preceding claims, in which the $(SiO_{2\,(FAU)})/(Al_2O_{3\,(FAU)})$ mole ratio is between 32 and 70.

5. Process according to one of the preceding claims, in which the $R/ (SiO_{2\,(FAU)})$ mole ratio is between 0.05 and 0.5.

6. Process according to one of the preceding claims, in which the $H_2O/(SiO_{2\,(FAU)})$ mole ratio is between 5 and 60.

7. Process according to one of the preceding claims, in which the $M_{2/n}O/ (SiO_{2\,(FAU)})$ mole ratio is between 0.01 and 0.25.

8. Process according to one of the preceding claims, in which M is chosen from lithium, potassium, sodium, magnesium and calcium and a mixture of at least two of these metals, M preferably being sodium.

9. Process according to Claim 8, in which the source of at least one alkali and/or alkaline-earth metal M is sodium hydroxide.

10. Process according to one of the preceding claims, in which step i) is performed for a time of greater than or equal to 10 minutes and advantageously for less than 2 hours, in particular less than 1.5 hours, preferably at room temperature and preferably with stirring, at a low or high shear rate.

11. Process according to one of the preceding claims, in which crystal seeds of a zeolite of AFX structure type, of a zeolite of BEA structure type and/or of an AFX-BEA composite material are added to the reaction mixture of step i), preferably in an amount of between 0.01% and 10% by weight relative to the total weight of the sources of $SiO_2$ and $Al_2O_3$ considered in their anhydrous form present in said mixture.

12. Process according to one of the preceding claims, in which step i) comprises a step of maturing the reaction mixture at a temperature of between 20 and 100°C, with or without stirring, for a time of between 30 minutes and 48 hours.

13. Process according to one of Claims 1 to 12, in which the hydrothermal treatment of step ii) is performed under autogenous pressure at a temperature of between 120°C and 220°C, preferably between 150°C and 195°C, for a period of between 12 hours and 15 days, preferably between 12 hours and 12 days, and more preferably between 12 hours and 8 days.

**14.** Process according to one of the preceding claims, in which the solid phase obtained from step ii) is filtered off, washed, and dried at a temperature of between 20 and 150°C, preferably between 60 and 100°C, for a time of between 5 and 24 hours, to obtain a dried zeolite.

**15.** Process according to Claim 14, in which the dried zeolite is then calcined at a temperature of between 450 and 700°C for a time of between 2 and 20 hours, the calcination possibly being preceded by a gradual temperature increase.

**16.** Zeolite composite material having a zeolite structure composed of an intimate mixture of zeolites of AFX structure type and of BEA structure type, said composite material being prepared by direct synthesis and comprising:

- between 30% and 90% by mass, preferably between 40% and 90% by mass of zeolite of AFX structure type, relative to the total mass of said composite material in its anhydrous form;
- between 10% and 70% by mass of zeolite of BEA structure type, preferably between 10% and 60% by mass of zeolite of BEA structure type, relative to the total mass of said composite material in its anhydrous form, and said composite material having an $SiO_2/Al_2O_3$ mole ratio of between 2 and 100.

**17.** Composite material according to the preceding claim, having an $SiO_2/Al_2O_3$ mole ratio of between 4 and 90 and more preferentially between 6 and 80.

**18.** Composite material according to Claim 16 or 17, in which the zeolite of BEA structure type is preferably a beta zeolite containing a mixture containing between 35% and 45% by mass, preferably 40% by mass, of polymorph A and between 55% and 65% by mass, preferably 60% by mass, of polymorph B.

**19.** Composite material according to one of Claims 16 to 18, having an X-ray diffraction diagram comprising at least the lines having the mean values of $d_{hkl}$ and the relative intensities as follows:

| 2 theta (°) | dhkl (Å) | Irel | 2 theta (°) | dhkl (Å) | Irel |
|---|---|---|---|---|---|
| 7.49 | 11.79 | vw-w | 26.11 | 3.41 | w-m |
| 7.71 | 11.46 | vw-w | 26.94 | 3.31 | vw |
| 8.71 | 10.14 | mw-m | 27.11 | 3.29 | vw |
| 11.66 | 7.59 | w-mw | 27.61 | 3.23 | vw |
| 12.97 | 6.82 | w | 28.04 | 3.18 | mw-m |
| 15.00 | 5.90 | vw | 28.68 | 3.11 | vw |
| 15.40 | 5.75 | vw | 29.51 | 3.03 | vw |
| 15.66 | 5.66 | w-mw | 30.19 | 2.96 | vw-w |
| 17.47 | 5.07 | mw | 30.58 | 2.92 | mw |
| 17.90 | 4.95 | w-mw | 30.99 | 2.88 | vw |
| 19.42 | 4.57 | vw | 31.59 | 2.83 | w-mw |
| 19.88 | 4.46 | vw-w | 32.50 | 2.75 | vw |
| 20.38 | 4.36 | S-VS | 33.73 | 2.66 | w-mw |
| 21.08 | 4.21 | w | 34.29 | 2.61 | vw |
| 21.31 | 4.17 | vw-w | 34.78 | 2.58 | vw |
| 21.82 | 4.07 | S-VS | 35.11 | 2.55 | vw |
| 22.19 | 4.00 | w-m | 35.79 | 2.51 | vw |
| 22.34 | 3.98 | w-VS | 37.56 | 2.39 | vw |
| 22.54 | 3.94 | vw-w | 38.00 | 2.37 | vw |

(continued)

| 2 theta (°) | dhkl (Å) | Irel | 2 theta (°) | dhkl (Å) | Irel |
|---|---|---|---|---|---|
| 22.70 | 3.91 | vw-w | 39.18 | 2.30 | vw |
| 23.67 | 3.76 | mw | 39.61 | 2.30 | vw |
| 25.24 | 3.52 | vw | | | |
| where VS = very strong; S = strong; m = medium; mw = moderately weak; w = weak; vw = very weak. The relative intensity $I_{rel}$ is given in relation to a relative intensity scale in which a value of 100 is assigned to the most intense line of the X-ray diffraction diagram: vw < 15; 15 ≤ w < 30; 30 ≤ mw < 50; 50 ≤ m < 65; 65 ≤ S < 85; VS ≥ 85; 1 ≤ vw-w < 30; 30 ≤ mw-m < 65; 15 ≤ w-mw <50; 65 ≤ S-VS ≤ 100; 15 ≤ w-m < 65; 15 ≤ w-VS ≤ 100. | | | | | |

**Figure 1**

**Figure 2**

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4508837 A
- US 5194235 A
- WO 2016077667 A1
- JP 2016169139 B, Inagaki Satoshi
- WO 2017200607 A1
- US 20180093897 A, H.-Y. Chen
- US 20180093259 A, H.-Y. Chen
- WO 2017202495 A1

**Littérature non-brevet citée dans la description**

- *Micropor. Mesopor. Mat.,* 2003, vol. 60, 237-249
- **R.H.ARCHER et al.** *Microp. Mesopor. Mat.,* 2010, vol. 130, 255-2265